# EUROPÄISCHE PATENTANMELDUNG

(11) **EP 1 447 379 A2**
(43) Veröffentlichungstag der Anmeldung: **18.08.2004**
(21) Anmeldenummer: 04000922.7
(22) Anmeldetag: 17.01.2004
(51) Int. Cl.: C01B 13/02

(54) **Verfahren zur Generierung von Singulett Sauerstoff und Verwendung desselben**

(30) Priorität: 12.02.2003 AT 2062003
(71) Anmelder: DSM Fine Chemicals Austria Nfg GmbH & Co KG, 4021 Linz (AT)
(72) Erfinder: Jary, Walther, Steinbach am Attersee (AT); Pöchlauer, Peter, 4040 Linz (AT); Falk, Heinz, 4040 Linz (AT); Gangelberger, Thorsten, 4020 Linz (AT)
(74) Vertreter: Lindinger, Ingrid

(57) **Zusammenfassung**

Verfahren zur Generierung von ¹O₂, bei welchem ein Ferrocen der Formel

Fc(X)n (I)

in der Fc ein gegebenenfalls durch Dimethylaminoethyl, C₁-C₁₂-Alkyl, Aryl oder Carboxyalkyl substituiertes Ferrocen bedeutet, n 1 oder 2 sein kann und X für einen Rest der Formel

- (C₁-C₂-Alkyl)ₘ-P(R¹)₂ (II)

steht, wobei m 0 oder 1 sein kann und R₁ Phenyl, Cyclohexyl, tert. Butyl, Ethyl, Isopropyl, Methyl, Methoxy, Ethoxy, Phenoxy oder Butoxy bedeutet,
in einem organischen Lösungsmittel bei einer Temperatur von -80°C bis +20°C mit 1 bis 4 mol Ozon pro mol Ferrocenverbindung versetzt wird wobei sich ¹O₂ bildet und Verwendung deselben zur Oxidation von organischen Substraten, die mit ¹O₂ reagieren.

## Beschreibung

Die einzige Singulett Sauerstoff Oxidation (¹O₂-Ox), die zur Zeit industriell durchgeführt wird, ist die photochemische ¹O₂-Ox, bei welcher der ¹O₂ auf photochemischen Weg generiert wird. Der Nachteil dieses Verfahrens ist durch die hohen Kosten der benötigten photochemischen Einrichtungen, sowie durch eine beschränkte Lebensdauer gegeben. Die benötigten Lampen degenerieren durch Verschmutzung der Glasoberfläche relativ rasch während der Oxidation. Außerdem eignet sich dieses Verfahren nicht für gefärbte Substrate. Das Verfahren ist eigentlich nur für Feinchemikalien geeignet, die im kleineren Maßstab hergestellt werden. (La Chimica e l'Industria, 1982, Vol. 64, Seite 156)
Aus diesem Grund wurde versucht andere Verfahrensvarianten für die ¹O₂-Ox zu finden, die für die ¹O₂-Ox von nicht-wasserlöslichen, hydrophoben organischen Substraten geeignet sind.

In J. Am. Chem. Soc., 1968, **90**, 975 wird beispielsweise die klassische "dark" ¹O₂-Ox beschrieben, bei welcher ¹O₂ nicht photochemisch sondern chemisch generiert wird. Dabei werden hydrophobe Substrate mittels eines Hypochlorit/H₂O₂ - Systems in einem Lösungsmittelgemisch aus Wasser und organischem Lösungsmittel oxidiert. Dieses Verfahren hat jedoch lediglich einige synthetische Anwendungen gefunden, da viele Substrate in dem benötigten Medium nur schwer löslich sind. Die Einsatzmöglichkeit ist außerdem aufgrund von Nebenreaktionen zwischen Hypochlorit und Substrat oder Lösungsmittel ziemlich eingeschränkt. Außerdem wird in der Gasphase ein großer Teil des ¹O₂ deaktiviert. Weiters ist dieses Verfahren nicht für den industriellen Maßstab geeignet, da es im organischen Medium zur Anlagerung des Hypochlorits an H₂O₂ kommt und ein großer Überschuss an H₂O₂ zur Unterdrückung der Nebenreaktion von Substrat mit Hypochlorit benötigt wird. Ein zusätzlicher Nachteil ergibt sich durch das Anfallen stöchiometrischer Salzmengen.

Eine Variante der "dark" ¹O₂-Ox, die nicht auf Hypochlorit basiert und somit obige Nachteile zum Teil vermeiden soll, ist beispielsweise aus J. Org. Chem., 1989, **54**, 726 oder J. Mol. Cat., 1997, **117**, 439 bekannt, wonach einige wasserlösliche organische Substrate mit H₂O₂ und einem Molybdatkatalysator in Wasser als Lösungsmittel oxidiert werden. Gemäß Membrane Lipid Oxid. Vol. II, 1991, 65 ist die ¹O₂-OX von wasserunlöslichen, organischen Substraten mit dem Molybdat/ H₂O₂ - System schwierig, da angenommen wurde, dass keines der üblichen Lösungsmittel geeignet ist, die von Molybdat katalysierte Disproportionierung von H₂O₂ in Wasser und ¹O₂ aufrecht zu erhalten. Die Verwendung von Molybdän-Katalysatoren bringt jedoch auch andere Nachteile mit sich. So katalysieren sie neben der H₂O₂ - Disproportionierung auch andere, unerwünschte Oxidationen von manchen Substraten. Allylalkohole können beispielsweise nicht effektiv mit dem Molybdat/H₂O₂-System peroxidiert werden, da diese Substanzgruppe von Molybdän in Gegenwart von H₂O₂ epoxidiert wird. Ein weiterer Nachteil dieser Katalysatoren ist der relativ geringe pH-Bereich in dem diese funktionieren. Diese Katalysatoren können nur im basischen Bereich zwischen pH 9 und pH 12 eingesetzt werden, die Verwendung dieses Systems ist demnach nicht geeignet für saure Bedingungen.

Eine weitere Möglichkeit ¹O₂ chemisch zu generieren stellt beispielsweise das Erwärmen von Triphenylphosphitozonid dar, das aus Triphenylphosphit und Ozon erhalten wird. Nachteil diese Methode ist, dass bei sehr tiefen Temperaturen gearbeitet werden muss, wobei das Ozonid zuerst gebildet und danach durch Erwärmen zersetzt wird, wobei ¹O₂ freigesetzt wird. Diese Methode wird jedoch, wie etwa in J. Org. Chem., Vol. 67, No 8, 2002, Seite 2418 beschrieben, nur für Mechanismusstudien angewendet, da Triphenylphosphit eine teure und zudem gefährliche Chemikalie darstellt.
Bei der basenkatalysierten Disproportionierung von Persäuren werden neben ¹O₂ weitere reaktive Verbindungen gebildet, die zu Nebenprodukten führen.

Aufgabe der vorliegenden Erfindung war es demnach, eine Möglichkeit zu finden ¹O₂ unter Vermeidung obiger Nachteile zu generieren.

Unerwarteterweise konnte diese Aufgabe durch die Verwendung von Ozon und einer Ferrocen-Verbindung gelöst werden.

Gegenstand der vorliegenden Erfindung ist demnach ein Verfahren zur Generierung von ¹O₂, das dadurch gekennzeichnet ist, dass ein Ferrocenderivat der Formel

Fc(X)n (I)

in der Fc ein gegebenenfalls durch Dimethylaminoethyl, C₁-C₁₂-Alkyl, Aryl oder Carboxyalkyl substituiertes Ferrocen bedeutet, n 1 oder 2 sein kann und X für einen Rest der Formel

-(C₁-C₂-Alkyl)ₘ-P(R¹)₂ (II)

steht, wobei m 0 oder 1 sein kann und R¹ Phenyl, Cyclohexyl, tert. Butyl, Ethyl, Isopropyl, Methyl, Methoxy, Ethoxy, Phenoxy oder Butoxy bedeutet, in einem organischen Lösungsmittel bei einer Temperatur von -80°C bis +20°C mit 1 bis 4 mol Ozon pro mol Ferrocenverbindung versetzt wird wodurch sich ¹O₂ bildet.

Bei dem erfindungsgemäßen Verfahren wird ¹O₂ durch die Umsetzung eines Ferrocenderivates der Formel (I) mit Ozon generiert.

In der Formel (I) bedeutet Fc Ferrocen. Das Ferrocenderivat ist sodann ein- oder 2-fach mit einem Rest der Formel (II) -(C₁-C₂-Alkyl)ₘ-P(R¹)₂ substituiert.
In der Formel (II) bedeutet m 0 oder 1. R¹ kann Phenyl, Cyclohexyl, tert. Butyl, Ethyl, Isopropyl, Methyl, Methoxy, Ethoxy, Phenoxy oder Butoxy bedeuten.
Gegebenenfalls kann das Ferrocen noch durch weitere Reste, beispielsweise durch Dimethylaminoethyl, C₁-C₁₂-Alkyl, Aryl oder Carboxyalkyl, substituiert sein.

Für das erfindungsgemäße Verfahren eignen sich sowohl chirale als auch nicht chirale Ferrocenverbindungen der Formel (I).

Beispiele für geeignete Ferrocenverbindungen der Formel (I) sind 1,1'-Bis-(diphenylphosphino)-ferrocen, (S,R)-1-(1-Dimethylaminoethyl)-1',2-bis-(diphenylphosphino)-ferrocen, (R,R)-1-(1-Dimethylaminoethyl)-1',2-bis-(diphenyl-phosphino)-ferrocen, (S,S)-1-(Dicyclohexylphosphino)-2-[1-(diphenylphosphino)ethyl]-ferrocen, (S,S)- 1-(Dicyclohexylphosphino)-2-[1-(dicyclohexylphosphino)ethyl]-ferrocen, (R,R)-1-(Dicyclohexylphosphino)-2-[1-(dicyclohexylphosphino)ethyl]-ferrocen, (R,R)- 1-(Dicyclohexylphosphino)-2-[1-(diphenylphosphino)ethyl]-ferrocen, (R,R)-1-[1-Di-tert.butylphosphino)ethyl]-2-(diphenylphosphino)-ferrocen, (R,R)-1-[1-(Dicyclohexylphosphino)-ethyl]-2-(diphenylphosphino)-ferrocen, u.s.w..

Die Ferrocenverbindung wird in einem organischen Lösungsmittel gelöst. Als Lösungsmittel eignen sich dabei Ethylacetat, Butylacetat, Methanol, Ethanol, Dichlormethan, Cyclohexan, Hexan, oder Essigsäure.
Bevorzugt wird Dichlormethan verwendet.
Anschließend wird auf -80°C bis +20°C, bevorzugt auf -50°C bis 0°C abgekühlt und Ozon zugeführt.
Ozon wird bei dem erfindungsgemäßen Verfahren in einer Menge von 1 bis 4,0 mol pro mol Ferrocenderivat zugesetzt. Bevorzugt werden 1 bis 2 Äquivalente Ozon eingesetzt.

Der sich bildende ¹O₂ wird sodann zur Oxidation von organischen Substraten, die mit ¹O₂ reagieren eingesetzt.

Ein weiterer Gegenstand der vorliegenden Erfindung ist demnach die Verwendung des durch die oben angeführten Ferrocenverbindungen generierten ¹O₂ zur Oxidation von organischen Substraten, die mit ¹O₂ reagieren.

Dies kann erfindungsgemäß dadurch erfolgen, dass bereits während der Umsetzung des Ferrocenderivates mit Ozon eine Lösung des entsprechenden Substrates zudosiert wird. Die Dosierung erfolgt dabei bevorzugt kontinuierlich.
Als Lösungsmittel für das Substrat eignen sich dabei wiederum Ethylacetat, Butylacetat, Methanol, Ethanol, Dichlormethan oder Essigsäure.
Bevorzugt wird Dichlormethan eingesetzt.
Bevorzugt wird das Lösungsmittel eingesetzt, das auch zum Lösen des Ferrocenderivates verwendet wird.
Anschließend wird gegebenenfalls überschüssiges Ozon ausgeblasen, beispielsweise durch Spülen mit Argon oder Stickstoff und die verbleibende Reaktionslösung, die das Oxidationsprodukt enthält, aufgearbeitet.

Die Zugabe der Substratlösung kann jedoch auch erst nach erfolgter Umsetzung des Ferrocenderivates mit Ozon und abschließendem Entfernen von gegebenenfalls überschüssiges Ozon erfolgen.
Erfolgt die Umsetzung des Ferrocenderivates mit Ozon bei tieferen Temperaturen (z.B. -80°C), so kann die mit der Substratlösung versetzte Reaktionslösung gegebenenfalls erwärmt werden, beispielsweise auf -10°C.

Die Aufarbeitung der Reaktionslösung, die das Oxidationsprodukt enthält, erfolgt durch übliche Methoden wie etwa Einengen, Extraktion, Trocknung und Isolierung des Oxidationsproduktes, beispielsweise durch Säulenchromatographie.
Die Abtrennung des Ferrocenderivates kann mittels Membrantechnologie erfolgen.

Als organische Substrate, die mit ¹O₂ reagieren können folgende Verbindungen eingesetzt werden: Olefine, die eine oder mehrere, d.h. bis zu 10, bevorzugt bis zu 6, besonders bevorzugt bis zu 4 C=C-Doppelbindungen enthalten; elektronenreiche Aromaten, wie C₆-C₅₀, bevorzugt bis C₃₀, besonders bevorzugt bis C₂₀ Phenole, Polyalkylbenzole, Polyalkoxybenzolen; polycyclische Aromaten mit 2 bis 10, bevorzugt bis 6, besonders bevorzugt bis 4 aromatischen Ringen; Sulfide, wie etwa Alkylsulfide, Alkenylsulfide, Arylsulfide, die am Schwefelatom entweder mono- oder disubstituiert sind, sowie Heterocyclen mit einem O-, N- oder S-Atom im Ring, wie beispielsweise C₄-C₅₀, bevorzugt bis C₃₀, besonders bevorzugt bis C₂₀ Furane, C₄-C₅₀, bevorzugt bis C₃₀, besonders bevorzugt bis C₂₀ Pyrrole, C₄-C₆₀, bevorzugt bis C₃₀, besonders bevorzugt bis C₂₀ Thiophene. Die Substrate können dabei einen oder mehrere Substituenten, wie Halogen (F, Cl, Br, J), Cyanid, Carbonylgruppen, Hydroxylgruppen, C₁-C₅₀, bevorzugt bis C₃₀, besonders bevorzugt bis C₂₀ Alkoxygruppen, C₁-C₅₀, bevorzugt bis C₃₀, besonders bevorzugt bis C₂₀ Alkylgruppen, C₆-C₅₀, bevorzugt bis C₃₀, besonders bevorzugt bis C₂₀ Arylgruppen, C₂-C₅₀, bevorzugt bis C₃₀, besonders bevorzugt bis C₂₀ Alkenylgruppen, C₂-C₅₀, bevorzugt bis C₃₀, besonders bevorzugt bis C₂₀ Alkinylgruppen, Carbonsäuregruppen, Estergruppen, Amidgruppen, Aminogruppen, Nitrogruppen, Silylgruppen, Silyloxygruppen, Sulfongruppen, Sulfoxidgruppen, aufweisen. Weiters können die Substrate substituiert sein mit einem oder mehreren NR¹R²-Resten, in denen R¹ oder R² gleich oder verschieden sein können sowie H; C₁-C₅₀, bevorzugt bis C₃₀, besonders bevorzugt bis C₂₀ Alkyl; Formyl; C₂-C₅₀, bevorzugt bis C₃₀, besonders bevorzugt bis C₂₀ Acyl; C₇-C₅₀, bevorzugt bis C₃₀, besonders bevorzugt bis C₂₀ Benzoyl bedeuten, wobei R¹ und R² auch gemeinsam einen Ring bilden können, wie z.B. in einer Phthalimidogruppe.
Beispiele für geeignete Substrate sind: 2-Buten; Isobuten; 2-Methyl-1-buten; 2-Hexen; 1,3-Butadien; 2,3-Dimethylbuten; Δ^{9,10}-Octalin, 2-Phthalimido-4-Methyl-3-penten; 2,3,-Dimethyl-1,3-Butadien; 2,4-Hexadien; 2-Chlor-4-methyl-3-penten; 2-Brom-4-methyl-3-penten; 1-Trimethylsilylcyclohexen; 2,3-Dimethyl-2-butenyl-*para*tolylsulfon; 2,3-Dimethyl-2-butenyl-*para*-tolylsulfoxid; *N*-Cyclohexenylmorpholin; 2-Methyl-2-norbornen; Terpinolen; α-Pinen; β-Pinen; β-Citronellol; Ocimen; Citronellol; Geraniol; Farnesol; Terpinen; Limonen; *trans*-2,3-Dimethylacrylsäure; α-Terpinen; Isopren; Cyclopentadien; 1,4-Diphenylbutadien; 2-Ethoxybutadien; 1,1'-Dicyclohexenyl; Cholesterol; Ergosterolacetat; 5-Chlor-1,3-cyclohexadien; 3-Methyl-2-buten-1-ol; 3,5,5-Trimethylcyclohex-2-en-1-ol; Phenol, 1,2,4-Trimethoxybenzol, 2,3,6-Trimethylphenol, 2,4,6-Trimethylphenol, 1,4-Dimethylnaphthalen, Furan, Furfurylalcohol, Furfural, 2,5-Dimethylfuran, Isobenzofuran, Dibenzylsulfid, (2-Methyl-5-*tert*-butyl)phenylsulfid u.s.w.

Aus den Substraten wird durch die erfindungsgemäße Oxidation das korrespondierende Oxidationsprodukt erhalten. Aus Alkenen, (polycyclischen) Aromaten oder Heteroaromaten werden insbesondere Hydroperoxide, Peroxide, Alkohole oder Ketone erhalten.

Durch das erfindungsgemäße Verfahren wird ¹O₂ auf einfache und effiziente Weise generiert. Ein weiterer Vorteil des Verfahrens ist, das bei der Reaktion kein Wasser gebildet wird.

### Beispiel 1-4: Generierung von Singulett-Sauerstoff mittels Ozon und 1,1'-Bis-(diphenylphosphino)-ferrocen

0,67 g (1,2 mmol) 1,1'-Bis-(diphenylphosphino)-ferrocen wurden in 50 ml Dichlormethan aufgenommen und auf -20°C abgekühlt. In diese Lösung wurden 6 g O₃/m³ (Gas-Flow 0,06 m³) 9,5 Minuten lang eingeleitet. Das Substrat wurde zuvor in 15 ml Dichlormethan aufgenommen und während der Ozonolyse kontinuierlich zudosiert. Nach beendeter Ozonaufnahme wurde das Rektionsgemisch bis auf 1/3 des ursprünglichen Volumens eingedampft, vom ausgefallenen Ferrocenderivat abfiltriert und das erhaltene Filtrat bis zur Trockene eingedampft. Die Resultate sind in nachstehender Tabelle 1 zusammengefasst.

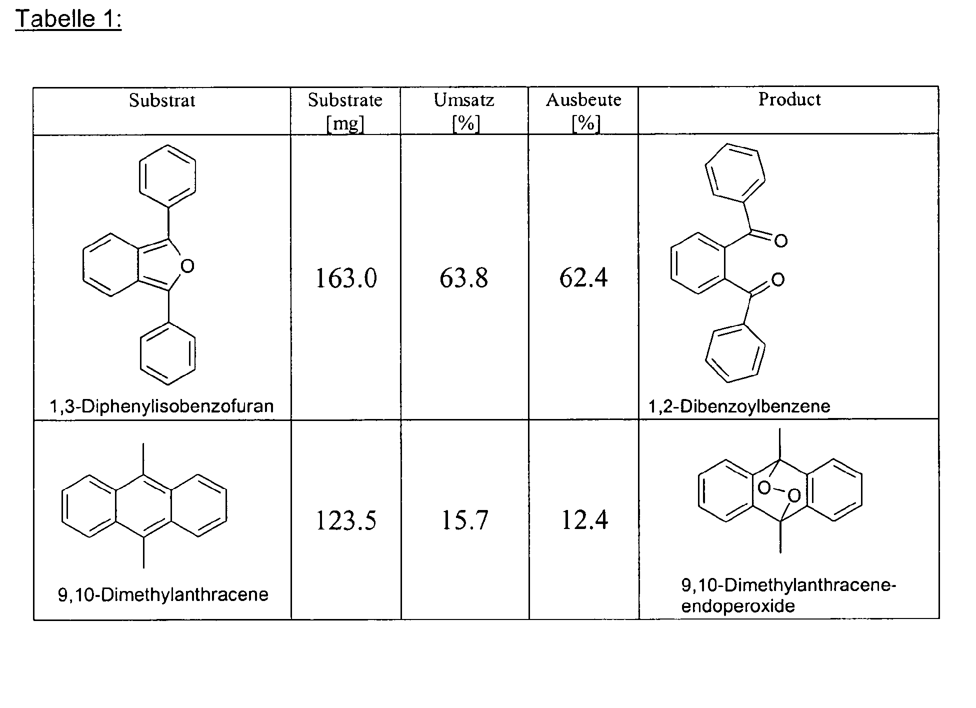

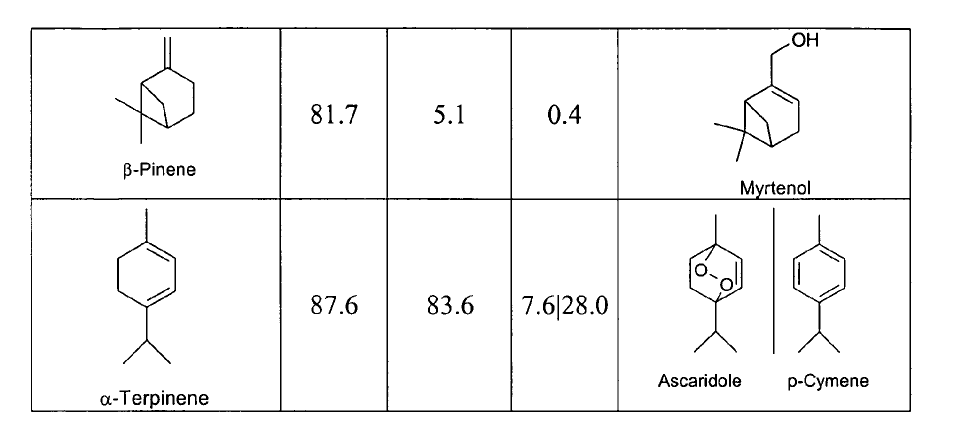

### Beispiel 5: Generierung von Singulett-Sauerstoff mittels Ozon und 1,1 -Bis-(diphenylphosphino)-ferrocen bei -10°C.

7,0 g 1,1'-Bis-(diphenylphosphino)-ferrocen wurden in 160 ml Dichlormethan gelöst und in einer Batch-Ozonolyse Apparatur auf -10°C gekühlt. Diese Lösung wurde bei -10°C mit zwei Äquivalenten Ozon versetzt. Während der Ozonolyse wurden der Reaktionslösung 1,78 g α-Terpinen in 20 ml Dichlormethan mittels einer Perfusorpumpe kontinuierlich zudosiert. Anschließend wurde überschüssiges Ozon durch Spülen der Apparatur mit Argon ausgeblasen. Die Reaktionslösung wurde eingedampft.
Zunächst wurde aus dem erhaltenen Rückstand das Ferrocenphosphat mittels Säulenchromatographie abgetrennt. Dazu wurden 150 g Kieselgel 60A als stationäre Phase und eine Mischung aus n-Hexan:MTBE 9:1 als mobile Phase verwendet.
Das Eluat wurde eingedampft, wodurch man ein gelbes Öl als Rückstand erhielt.

Aus dem erhaltenen Öl wurde das Singulett-Oxidationsprodukt (Ascaridol) mittels Säulenchromatographie isoliert. Dazu wurden 50 g Kieselgel 60A als stationäre Phase und eine Mischung aus n-Hexan:MTBE 9:1 als mobile Phase verwendet.

Die vereinigten Fraktionen, welche Ascaridol enthielten, wurden eingedampft, wobei man ein gelbes, öliges Produkt erhielt. Das Produkt wurde mittels H-NMR und Dünnschichtchromatographie charakterisiert.
**Ausbeute**: 75 mg Ascaridol (25% d.Th).

## Patentansprüche

1. Verfahren zur Generierung von ¹O₂, **dadurch gekennzeichnet, dass** ein Ferrocen der Formel
Fc(X)n (I)
in der Fc ein gegebenenfalls durch Dimethylaminoethyl, C₁-C₁₂-Alkyl, Aryl oder Carboxyalkyl substituiertes Ferrocen bedeutet, n 1der 2 sein kann und X für einen Rest der Formel
-(C₁-C₂-Alkyl)ₘ-P(R¹)₂ (II)
steht, wobei m 0 oder 1 sein kann und R₁ Phenyl, Cyclohexyl, tert. Butyl, Ethyl, Isopropyl, Methyl, Methoxy, Ethoxy, Phenoxy oder Butoxy bedeutet, in einem organischen Lösungsmittel bei einer Temperatur von -80°C bis +20°C mit 1 bis 4 mol Ozon pro mol Ferrocenverbindung versetzt wird wodurch sich ¹O₂ bildet.

2. Verfahren nach Anspruch 1, **dadurch gekennzeichnet, dass** als Ferrocenverbindung 1-(Diphenylphosphino)-ferrocen, 1,1'-Bis-(diphenyl-phosphino)-ferrocen, (S,R)-1-(1-Dimethyl-aminoethyl)-1',2-bis-(diphenyl-phosphino)-ferrocen, (R,R)-1-(1-Dimethylamino-ethyl)-1',2-bis-(diphenyl-phosphino)-ferrocen, (S,S)-1-(Dicyclohexylphosphino)-2-[1-(diphenylphosphino)ethyl]-ferrocen, (S,S)-1-(Dicyclohexylphosphino)-2-[1-(di-cyclohexylphosphino)ethyl]-ferrocen, (R,R)-1-(Dicyclohexylphosphino)-2-[1-(di-cyclohexylphosphino)ethyl]-ferrocen, (R,R)-1-(Dicyclohexylphosphino)-2-[1-(di-phenylphosphino)ethyl]-ferrocen, (R,R)-1-[1-Ditert.-butylphosphino)ethyl]-2-(di-phenylphosphino)-ferrocen oder (R,R)-1-[1-(Dicyclohexyl-phosphino)-ethyl]-2-(di-phenylphosphino)-ferrocen eingesetzt wird.

3. Verfahren nach Anspruch 1, **dadurch gekennzeichnet, dass** als organisches Lösungsmittel Ethylacetat, Butylacetat, Methanol, Ethanol, Dichlormethan oder Essigsäure verwendet wird.

4. Verfahren nach Anspruch 1, **dadurch gekennzeichnet, dass** die Reaktionstemperatur bei -50 bis -5°C liegt.

5. Verfahren nach Anspruch 1, **dadurch gekennzeichnet, dass** ein bis zwei Äquivalente Ozon eingesetzt werden.

6. Verwendung von gemäß Anspruch 1 generiertem ¹O₂ zur Oxidation von organischen Substraten, die mit ¹O₂ reagieren.

7. Verwendung nach Anspruch 6, **dadurch gekennzeichnet, dass** bereits während der Umsetzung der Ferrocenverbindung mit Ozon eine Lösung eines organischen Substrates, das Mit ¹O₂ reagiert, zudosiert wird.

8. Verfwendung nach Anspruch 6, **dadurch gekennzeichnet, dass** anschließend an die Umsetzung der Ferrocenverbindung mit Ozon, nach Entfernen von gegebenenfalls überschüssigem Ozon eine Lösung eines organischen Substrates, das mit ¹O₂ reagiert, zudosiert wird.

9. Verwendung nach Anspruch 7 oder 8, **dadurch gekennzeichnet, dass** als Lösungsmittel für das Substrat Ethylacetat, Butylacetat, Methanol, Ethanol, Dichlormethan oder Essigsäure verwendet wird.
